## Europäisches Patentamt

## European Patent Office

## Office européen des brevets

(19)

(11) Veröffentlichungsnummer: **0 155 646**
**B1**

(12) # EUROPÄISCHE PATENTSCHRIFT

(45) Veröffentlichungstag der Patentschrift:
**26.07.89**

(51) Int. Cl.⁴: **F 16 F 13/00, B 60 K 5/12**

(21) Anmeldenummer: **85102979.3**

(22) Anmeldetag: **15.03.85**

(54) **Zweikammer-Motorlager mit hydraulischer Dämpfung.**

(30) Priorität: **23.03.84 DE 3410781**

(43) Veröffentlichungstag der Anmeldung:
**25.09.85 Patentblatt 85/39**

(45) Bekanntmachung des Hinweises auf die Patenterteilung:
**26.07.89 Patentblatt 89/30**

(84) Benannte Vertragsstaaten:
**DE FR GB IT SE**

(56) Entgegenhaltungen:
**EP-A- 0 038 062**
**DE-A- 3 246 587**

(73) Patentinhaber: **METZELER Gesellschaft mit beschränkter Haftung, Gneisenaustrasse 15, D-8000 München 50 (DE)**
Patentinhaber: **Sciortino, Giacomo, Dipl.-Ing., Schröderstrasse 1, D-6900 Heidelberg (DE)**

(72) Erfinder: **Hofmann, Manfred, Gerhard von Dietz-Strasse 15, D-6257 Hünfelden 1 (DE)**
Erfinder: **Müller, Hans, Ringstrasse 24, D-5410 Höhr-Grenzhausen (DE)**
Erfinder: **Waldecker, Ralf, Augustastrasse 10, D-5450 Neuwied 1 (DE)**
Erfinder: **Sciortino, Giacomo, Schröderstrasse 1, D-6900 Heidelberg 1 (DE)**

(74) Vertreter: **Michelis, Theodor, Dipl.-Ing., Gneisenaustrasse 15, D-8000 München 50 (DE)**

## Beschreibung

Die Erfindung betrifft ein Zweikammer-Motorlager entsprechend dem Oberbegriff des Patentanspruchs 1.

Derartige Motorlager sind beispielsweise aus der EP-PS 0 027 751 bekannt. Die im allgemeinen sehr guten Dämpfungswerte derartiger Motorlager werden im wesentlichen durch die im Verhältnis zu ihrem Durchmesser sehr lange Düse in der Düsenplatte erreicht, wobei die in dem Düsenkanal eingeschlossene Flüssigkeitssäule praktisch als Tilgermasse wirkt.

Um ein optimales Dämpfungsverhalten derartiger Lager zu erreichen, müssen diese jeweils auf den speziellen Fahrzeugtyp und auf den jeweils verwendeten Motor abgestimmt werden. Dabei ist jedoch nur aus einer Vielzahl verschiedener, nicht modifizierbarer Lagervarianten ein hinreichend akzeptabler Mittelwert für die Dämpfung zu verwirklichen, während eine optimale Einstellung des jeweiligen Lagers, um individuelle Toleranzen oder sonstige Unterschiede ausgleichen zu können, nicht möglich ist, da die fertig montierten Lager in ihren Eigenschaften nicht mehr verändert werden können.

Der Erfindung liegt daher die Aufgabe zugrunde, ein Zweikammer-Motorlager zu schaffen, bei dem auch im eingebauten Zustand im Fahrzeug noch eine Verstellung und damit eine optimale Einstellung ihrer individuellen Dämpfungseigenschaften möglich ist.

Die Lösung dieser Aufgabe wird erfindungsgemäß mit den kennzeichnenden Merkmalen des Anspruchs 1 erreicht.

Durch die horizontale Teilung der Düsenplatte, bei der nur die obere Plattenhälfte fest im Lager eingebaut und die untere Plattenhälfte demgegenüber verdrehbar ausgebildet ist, lassen sich somit auf einfache Weise Länge und/oder Querschnitt des Düsenkanals verändern.

Zweckmäßige Ausgestaltungen der Erfindung sind in den Unteransprüchen genannt.

Anhand einer schematischen Zeichnung sind Aufbau und Wirkungsweise von Ausführungsbeispielen nach der Erfindung näher erläutert. Dabei zeigen:

Fig. 1 einen Längsschnitt durch ein Zweikammer-Motorlager mit geteilter Düsenplatte;

Fig. 2 eine Aufsicht auf die Düsenplatte entsprechend der Schnittlinie II–II nach Fig. 1;

Fig. 3 einen Längsschnitt durch eine Düsenplatte mit wendelförmigem Kanal mit Verstellung von Länge und Querschnitt des Kanals;

Fig. 4 eine Seitenansicht der oberen Plattenhälfte aus Fig. 3;

Fig. 5 eine Aufsicht auf die Düsenplatte nach Fig. 3;

Fig. 6 eine Seitenansicht der unteren Plattenhälfte des Ausführungsbeispiels nach Fig. 3;

Fig. 7 eine Aufsicht auf die untere Plattenhälfte nach Fig. 6;

Fig. 8 einen Längsschnitt durch eine weitere Variante einer zweigeteilten Düsenplatte mit Verstellung von Länge und/oder Querschnitt des Düsenkanals und

Fig. 9 eine Aufsicht auf die untere Plattenhälfte der Düsenplatte nach Fig. 8.

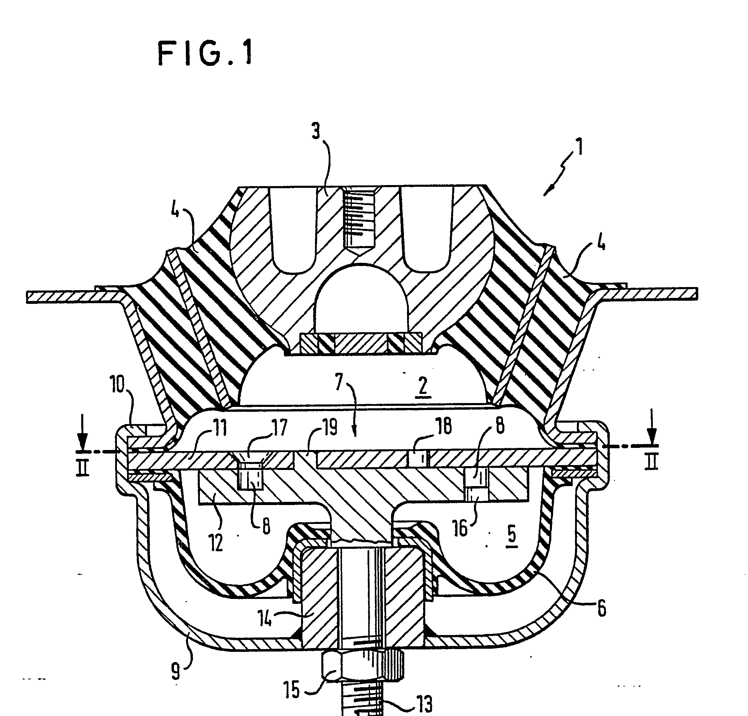

Wie aus dem Längsschnitt nach Fig. 1 zu ersehen ist, besteht ein derartiges Zweikammer-Motorlager 1 im wesentlichen aus einer oberen Kammer 2, die von einer die Motorlagerplatte 3 konisch zulaufend umgebenden elastischen Gummitragfeder 4 umschlossen ist, sowie einer unteren Kammer 5 innerhalb eines weichelastischen Gummibalges 6. Beide Kammern 2 und 5 stehen über einen in eine Düsenplatte 7 eingelassenen Düsenkanal 8 miteinander in Verbindung. Der untere Kammerbalg 6 ist dabei noch von einer metallischen Kappe 9 umschlossen, die gleichzeitig mit ihrem oberen umgebördelten Rand 10 das untere Ende der Kammerwandung 4, die Düsenplatte 7 und den unteren Kammerbalg 6 flüssigkeitsdicht verspannt.

Erfindungsgemäß ist nunmehr die Düsenplatte 7 horizontal geteilt und zwar in eine obere Plattenhälfte 11, die fest in das Motorlager 1 eingebaut ist, und eine untere Plattenhälfte 12. Diese untere Plattenhälfte 12 weist einen zentralen, den unteren Kammerbalg 6 und die untere Gehäusewandung 9 durchsetzenden Zapfen 13 auf, der innerhalb des massiven Lagergehäuses 9 in einer Buchse 14 nach außen geführt und über einer Mutter 15 verspannt ist.

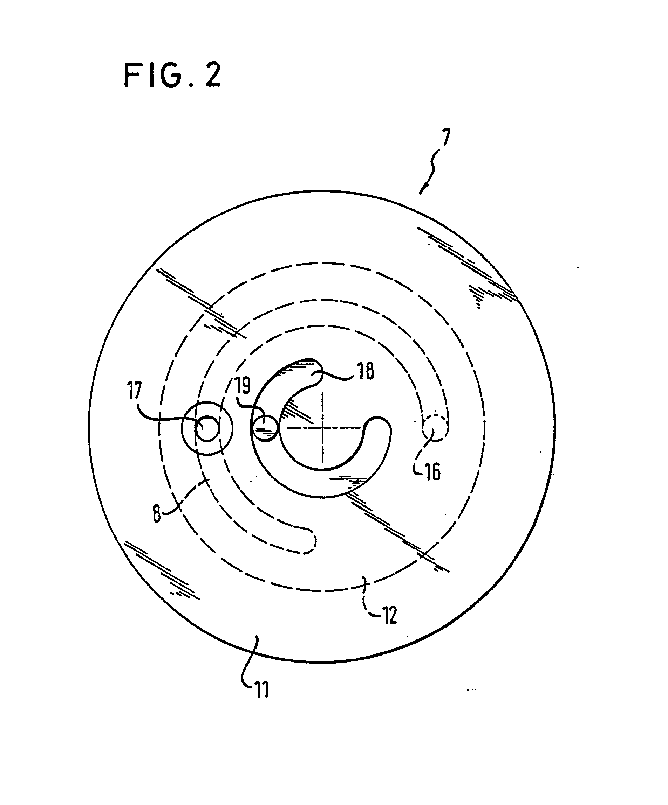

Der Düsenkanal 8 ist allein in die untere Plattenhälfte 12 eingeschnitten und erstreckt sich kreisbogenförmig über mindestens 180°, wie man auch aus der gestrichelten Darstellung der Aufsicht nach Fig. 2 erkennt. Dieser Düsenkanal 8 weist an seinem einen Ende eine die untere Plattenhälfte 12 durchdringende Auslaßöffnung 16 auf, während die Einlaßöffnung 17 in die obere Plattenhälfte 11 eingeschnitten ist und mit dem kreisbogenförmigen Düsenkanal 8 fluchtet. Damit ergibt sich bei Verdrehung der unteren Plattenhälfte 12 durch den Bolzen 13 eine einstellbare Länge des Düsenkanals 8, da die wirksame Länge dieses Düsenkanals einmal vom Auslaß 16 und zum anderen von der jeweiligen Lage der Einlaßöffnung 17 am Düsenkanal 8 bestimmt wird.

Zur Führung der unteren Plattenhälfte 12 ist eine ebenfalls kreisbogenförmig verlaufende Nut 18 von gleichem Umfangswinkel wie der Düsenkanal 8, jedoch in spiegelbildlicher Anordnung, eingeschnitten. In dieser Nut 18 wird ein als Anschlag wirkender Führungszapfen 19, der auf der unteren Plattenhälfte 12 sitzt, geführt, wodurch der Drehwinkel der unteren Plattenhälfte 12 entsprechend der Länge des Düsenkanals 8 begrenzt werden kann.

Mit dieser Unterteilung der Düsenplatte 7 in eine obere und eine untere Plattenhälfte, die gegeneinander verdrehbar sind, und die entsprechende Ausbildung des Düsenkanals ist es also auf einfache Weise möglich, auch bei einem fertig montierten Motorlager noch die Länge des Düsenkanals zu verstellen und damit die erforderliche Dämpfung zu optimieren.

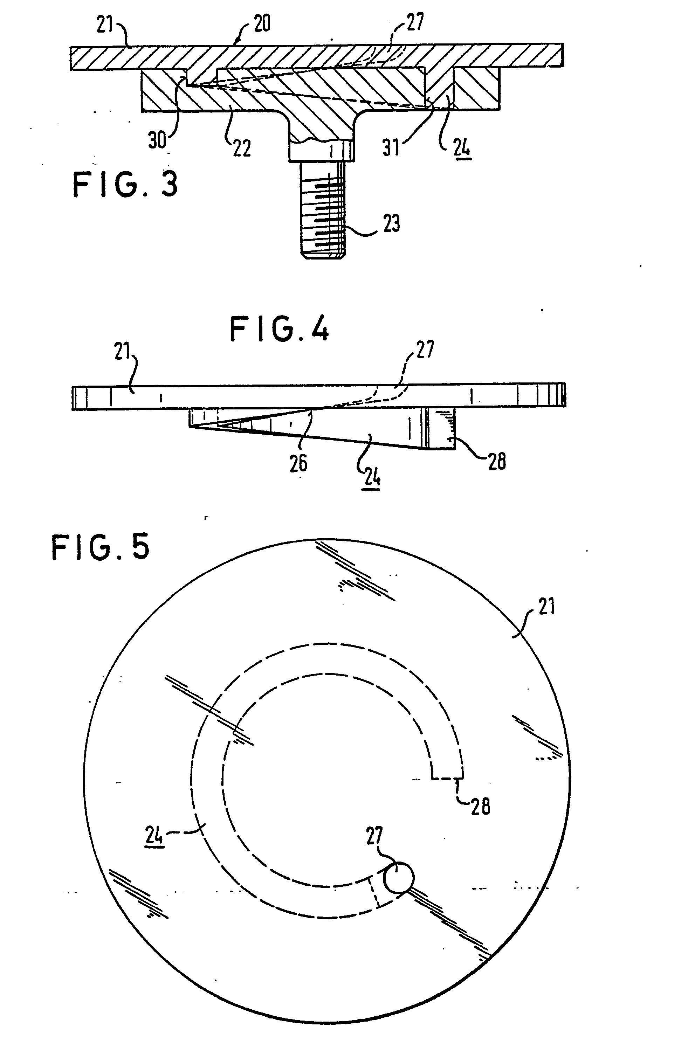

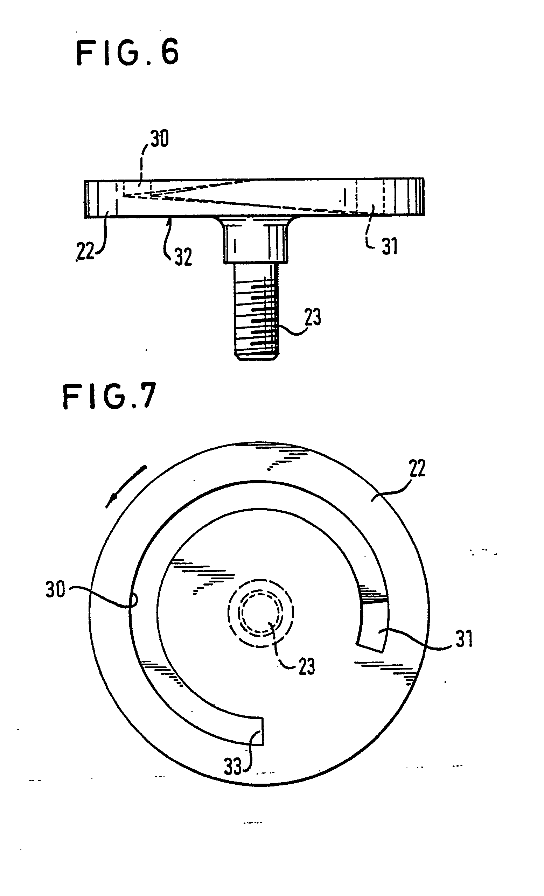

Eine weitere Möglichkeit der Ausbildung der Düsenplatte zur Veränderung des Querschnittes des Düsenkanals ist in den Fig. 3–7 gezeigt. Wie aus dem Längsschnitt nach Fig. 3 zu ersehen ist, besteht die Düsenplatte 20 ebenfalls aus einer oberen Plattenhälfte 21 und einer unteren Plattenhälfte 22 mit dem zentral angesetzten Zapfen 23. Hierbei weist die obere Plattenhälfte 21 – wie aus der Seitenansicht nach Fig. 4 ersichtlich ist – auf ihrer Unterseite einen kreisbogenförmigen und rampenförmig ansteigenden Ansatz 24 auf, dessen Länge sich aus der gestrichelten Darstellung der Aufsicht auf die obere Plattenhälfte 21 nach Fig. 5 ergibt und der an seinem flach zulaufenden Ende 26 in eine tangential anschließende und die obere Plattenhälfte 21 durchdringende Einlaßöffnung 27 übergeht. Das andere Ende dieses Ansatzes 24 endet in einem senkrecht verlaufenden Anschnitt 28. Entsprechend diesem Ansatz 24 ist nunmehr in die untere Plattenhälfte 22 – wie sich das aus Fig. 6 und 7 ergibt – ein ebenfalls kreisbogenförmiger, wendelförmig flach ansteigender Düsenkanal 30 derart eingeschnitten, daß er im Bereich der Austrittsöffnung 31 die Unterseite 32 der unteren Plattenhälfte 22 anschneidet und am anderen Ende 33 flach auf der Oberseite ausläuft.

Wie man aus dem Längsschnitt nach Fig. 3 jetzt leicht erkennt, wird bei einem Verdrehen der unteren Plattenhälfte 22 durch den Zapfen 23 sich der Querschnitt des Düsenkanals 30 – je nach Drehrichtung – vergrößern oder verkleinern, wobei sich jedoch auch geringfügig die Länge des Düsenkanals 30 ändert.

Mit einer derartigen Querschnittsveränderung ändert sich damit auch die Menge der im Düsenkanal enthaltenen Flüssigkeit, wodurch dann die Dämpfungswerte entsprechend angepaßt werden können.

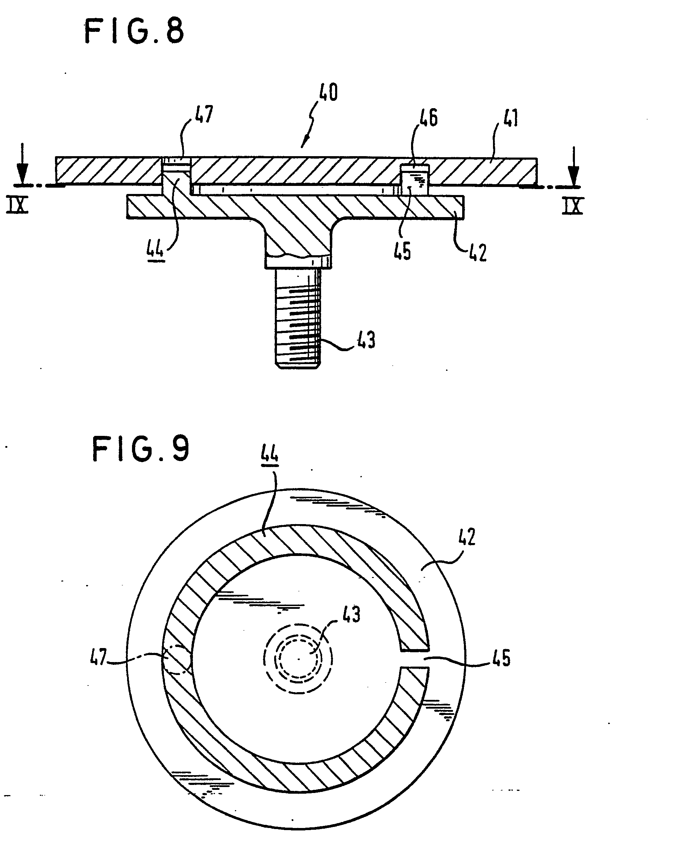

Eine weitere Ausführungsform zur Veränderung von Länge und/oder Querschnitt des Düsenkanals ist in den Ausführungsbeispielen nach Fig. 8 und 9 dargestellt. Aus dem Längsschnitt nach Fig. 8 ergibt sich, daß die Düsenplatte 40 ebenfalls in eine obere Plattenhälfte 41 und eine untere Plattenhälfte 42 mit einem zentralen Zapfen 43 unterteilt ist. Die untere Plattenhälfte 42 trägt dabei – wie aus der Aufsicht nach Fig. 9 zu erkennen ist – einen kreisringförmigen Aufsatz 44 rechteckigen Querschnittes, der an der die Auslaßöffnung 45 bildenden Stelle unterbrochen ist. Symmetrisch dazu ist in die obere Plattenhälfte 41 ein vollständig umlaufender Düsenkanal 46 eingeschnitten, der an einer Stelle eine die obere Plattenhälfte 41 durchdringende Einlaßöffnung 47 aufweist. Wenn nun der Ansatz 44 der unteren Plattenhälfte 42 in den Düsenkanal 46 der oberen Plattenhälfte 41 eingesetzt wird, so bildet sich bei Verdrehung der unteren Plattenhälfte 42 ein unterschiedlich langer Düsenkanal 46 zwischen der Einlaßöffnung 47 und dem Auslaßspalt 45. Durch vertikales Verschieben der unteren Plattenhälfte 42 kann darüber hinaus noch zusätzlich oder allein der Querschnitt des Düsenkanals 46 verändert werden.

Auch hiermit ist also eine Verstellung der Düse im eingebauten Zustand des Motorlagers zur Optimierung ihrer Dämpfungseigenschaften möglich.

Nach den Prinzipien der dargestellten Ausführungsbeispiele ergeben sich also Zweikammer-Motorlager, die in einfacher Weise auch im komplettierten Zustand und sogar noch nach ihrem Einbau in das Fahrzeug in ihren Dämpfungseigenschaften optimiert werden können, indem der für die Dämpfungscharakteristika wesentliche Düsenkanal in seiner Länge, in seinem Querschnitt oder aber auch in beiden Parametern verstellt werden kann.

## Patentansprüche

1. Zweikammer-Motorlager mit hydraulischer Dämpfung, dessen beide, von gummielastischen Umfangswänden (4, 6) umgebenen und mit einer Flüssigkeit gefüllten Kammern (2, 5) über einen zwischen beiden Kammern (2, 5) in einer Düsenplatte (7) verlaufenden Düsenkanal (8) miteinander in Verbindung stehen, wobei die Düsenplatte (7) horizontal geteilt ist und der Düsenkanal (8) zumindest zum Teil durch eine, in einer Plattenhälfte (12; 22; 41) angeordnete offene, kreisbogenförmige Nut (8; 30; 46) gebildet ist, die durch die andere Plattenhälfte (11; 21; 42) abgedeckt ist, wobei die Nut (8; 30; 46) über eine Einlaßöffnung (17; 27; 47) in der oberen Plattenhälfte (11; 21; 41) bzw. eine Auslaßöffnung (16; 28; 45) in der unteren Plattenhälfte (12; 22; 42) mit der jeweiligen oberen bzw. unteren Kammer (2; 5) in Verbindung steht, dadurch gekennzeichnet, daß die untere Plattenhälfte (12; 22; 42) über einen zentralen, das Lagergehäuse (9) durchsetzenden Zapfen (15; 23; 43) unter Veränderung von Länge und/oder Querschnitt des freien Düsenkanals (8; 30; 46) gegenüber der fest eingebauten oberen Plattenhälfte (11; 21; 41) um ihre Mittelachse verdrehbar ist.

2. Zweikammer-Motorlager nach Anspruch 1, dadurch gekennzeichnet, daß der Zapfen (13) flüssigkeitsdicht durch die untere Kammerwandung (6) und eine das massive Lagerschutzgehäuse (9) durchsetzende Buchse (14) nach außen geführt ist.

3. Zweikammer-Motorlager nach Anspruch 1 und 2, dadurch gekennzeichnet, daß der sich über mindestens 180° erstreckende, kreisbogenförmige Düsenkanal (8) mit einer Auslaßöffnung (16) an einem Ende allein in die untere Plattenhälfte (12) eingeschnitten ist, und mit der die obere Plattenhälfte (11) durchdringenden Einlaßöffnung (17) an einer vorgegebenen Stelle des Kanalverlaufs (8) fluchtet, und daß von der unteren Plattenhälfte (12) ein als Anschlag ausgebildeter Führungszapfen (19) in eine spiegelbildlich zum Düsenkanal (8) in der oberen Plattenhälfte (11) verlaufenden kreisbogenförmigen Nut (18) eingreift.

4. Zweikammer-Motorlager nach Anspruch 3, dadurch gekennzeichnet, daß die Nut als die obere Plattenhälfte (11) durchdringender, kreisbogenförmiger Einschnitt (18) ausgebildet ist.

5. Zweikammer-Motorlager nach Anspruch 1 und 2, dadurch gekennzeichnet, daß in die Oberseite der unteren Plattenhälfte (22) ein kreisbogenförmiger, wendelförmig flach ansteigender Düsenkanal (30) derart eingeschnitten ist, daß er im Bereich der Austrittsöffnung (31) die Unterseite (32) der unteren Plattenhälfte (22) anschneidet und am anderen Ende (33) flach auf der Oberseite ausläuft und daß die obere Plattenhälfte (21) auf ihrer Unterseite einen kreisbogenförmigen und rampenförmig ansteigenden Ansatz (24) entsprechend dem in die untere Plattenhälfte (22) eingeschnittenen Düsenkanal (30) trägt, welcher Ansatz (24) an seinem flach zulaufenden Ende (26) in die die obere Plattenhälfte (21) durchdringende Einlaßöffnung (27) übergeht.

6. Zweikammer-Motorlager nach Anspruch 5, dadurch gekennzeichnet, daß die von der Oberseite der oberen Plattenhälfte (21) senkrecht einmündende Einlaßöffnung (27) tangential mit der Steigung des Ansatzes (24) ausmündet.

7. Zweikammer-Motorlager nach Anspruch 1 und 2, dadurch gekennzeichnet, daß in die Unterseite der oberen Plattenhälfte (41) eine kreisringförmige Nut (46) mit einer die Oberseite durchdringenden Einlaßöffnung (47) eingeschnitten und die Oberseite der unteren Plattenhälfte (42) mit einem in die Nut (46) ragenden kreisringförmigen Aufsatz (44) versehen ist, der an einer Stelle seines Umfanges einen sich bis zur Oberfläche der unteren Plattenhälfte (42) erstreckenden Einschitt (45) aufweist.

8. Zweikammer-Motorlager nach Anspruch 7, dadurch gekennzeichnet, daß die untere Plattenhälfte (42) zusätzlich axial verschiebbar gelagert ist.

## Claims

1. Hydraulic motor support with two damping spaces, in which both spaces (2, 5), which are surrounded by elastomeric peripheral walls (4, 6) and filled with a fluid, are in communication with one another by means of a nozzle channel (8) extending in a nozzle plate (7) between the two spaces (2, 5), the nozzle plate (7) being divided into two parts horizontally and the nozzle channel (8) being at least partly formed by an open circular groove (8; 30; 46) disposed in one plate half (12; 22; 41) and covered by the other plate half (11; 21; 42), the groove (8; 30; 46) being in communication with the respective upper or lower space (2, 5) by means of an inlet orifice (17; 27; 47) in the upper plate half (11; 21; 41) or an outlet orifice (16; 28; 45) in the lower plate half (12; 22; 42), characterised in that the lower plate half (12; 22; 42) can be rotated about its central axis relative to the rigidly mounted upper plate half (11; 21; 41) by means of a centrally disposed pin (13; 23; 43) passing through the support housing (9), varying the length and/or cross section of the open nozzle channel (8; 30; 46).

2. Motor support with two spaces according to claim 1, characterised in that the pin (13) is guided outwardly in a fluidtight manner through the lower wall (6) and a bushing (14) passing through the solid support protective housing (9).

3. Motor support with two spaces according to claims 1 and 2, characterised in that the circular nozzle channel (8) extending over at least 180° has an outlet orifice (16) cut in at only one end of the lower plate half (12), and with which the inlet orifice (17) passing through the upper plate half (11) is aligned at a given point in the course of the channel (8), and that a guide pin (19) formed on the lower plate half (12) and acting as a stop engages into a circular groove (18) extending in the upper plate half (11) and disposed so that it is symmetrical with the nozzle channel (8).

4. Motor support with two spaces according to claim 3, characterised in that the groove forms the circular recess (18) passing through the upper plate half (11).

5. Motor support with two spaces according to claims 1 and 2, characterised in that a circular spirally rising nozzle channel (30) is cut into the upper surface of the lower plate half (22) in such a way that it starts at the lower surface (32) of the lower plate half (22) in the region of the outlet orifice (31) and at the other end (33) ends level with the upper surface, and that on its lower surface the upper plate half (21) has a circular projection (24) rising in a ramp-like manner and corresponding to the nozzle channel (30) cut into the lower plate half (22), said projection (24) passing over at its flat end (26) into the inlet orifice (27) passing through the upper plate half (21).

6. Motor support with two spaces according to claim 5, characterised in that the inlet orifice (27) ends tangentially at the upper surface of the upper plate half (21), corresponding to the incline of the projection (24).

7. Motor support with two spaces according to claims 1 and 2, characterised in that a circular groove (46) having an inlet orifice (47) passing through the upper surface is cut into the lower surface of the upper plate half (41) and the upper surface of the lower plate half (42) is provided with a circular projection (44) extending into the groove (46), said projection (44) at one point in its circumference having a recess (45) extending to the upper surface of the lower plate half (42).

8. Motor support according to claim 7, characterised in that the lower plate half (42) is also axially displaceable.

## Revendications

1. Support de moteur à amortissement hydraulique à deux chambres, dont les deux chambres (2, 5), entourées de parois de pourtour (4, 6) ayant l'élasticité du caoutchouc et emplies d'un liquide, communiquent l'une avec l'autre par un canal à buse (8) s'étendant entre les deux chambres (2, 5) dans une plaque à buse (7), la plaque à buse (8) étant subdivisée horizontalement et le canal à buse (8) étant formé, au moins en partie, d'une gorge (8; 30; 46) en forme d'arc de cercle, ouverte, ménagée dans une moitié de plaque (12; 22; 41) et recouverte par l'autre moitié de plaque (11; 21; 42), la gorge (8; 30; 46) communiquant, par un orifice d'admission (17; 27; 47) ménagé dans la moitié de plaque inférieure (12; 22; 42) avec la chambre supérieure (2) et inférieure (5) respectivement, caractérisé en ce que la moitié de plaque inférieure (12; 22; 42) peut tourner autour de son axe médian par rapport à la moitié de plaque supérieure (11; 21; 41), qui est montée fixe, par l'intermédiaire d'un tourillon (13; 23; 43) central et traversant le carter du support (9), avec modification de la longueur et/ou de la section transversale du canal de buse libre (8; 30; 46).

2. Support de moteur à deux chambres suivant la revendication 1, caractérisé en ce que le tourillon (13) est guidé vers l'extérieur d'une manière étanche aux liquides, à travers la paroi de chambre inférieure (6) et à travers une douille (44) traversant le capot massif de protection du support (9).

3. Support de moteur à deux chambres suivant la revendication 1 ou 2, caractérisé en ce que le canal à buse (8), en forme d'arc de cercle s'étendant sur au moins 180°, et ayant un orifice de sortie (16) à une extrémité, est ménagé seulement dans la moitié de plaque inférieure (12) et est aligné en un point prescrit du tracé du canal (8) avec un orifice d'admission (17) passant à travers la moitié de plaque supérieure (11) et en ce qu'un tenon de guidage (19), constitué en butée, pénètre de la moitié de plaque inférieure (12) dans la gorge (18) en forme d'arc de cercle s'étendant dans la moitié de plaque supérieure (11) et à symétrie de reflexion par rapport au canal à buse (8).

4. Support de moteur à deux chambres suivant la revendication 3, caractérisé en ce que la gorge est constituée en entaille (18) en forme d'arc de cercle et traversant la moitié de plaque supérieure (11).

5. Support de moteur à deux chambres suivant la revendication 1 ou 2, caractérisé en ce que, dans le côté supérieur de la moitié de plaque inférieure (22) est ménagé un canal à buse (30) qui est en forme d'arc de cercle, qui monte en pente douce sous la forme d'une hélice, et qui coupe, dans la région de l'orifice de sortie (31), le côté inférieur (32) de la moitié de plaque inférieure 822) et qui sort à l'autre extrémité (33) à plat, du côté supérieur et en ce que la moitié de plaque supérieure (21) porte, du côté inférieur, un appendice (24) en forme d'arc de cercle et montant en forme de rampe, qui correspond au canal à buse (30) ménagé dans la moitié de plaque inférieure (22), cet appendice (24) se transformant, à son extrémité (26) d'accès à plat, en l'orifice d'admission (27) traversant la moitié de plaque supérieure (21).

6. Support de moteur à deux chambres suivant la revendication 5, caractérisé en ce que l'orifice d'admission (27) arrivant verticalement du côté supérieur de la moitié de plaque supérieure (21) débouche tangentiellement à la pente de l'appendice (24).

7. Support de moteur à deux chambres suivant la revendication 1 ou 2, caractérisé en ce que, dans le côté inférieur de la moitié de plaque supérieur (41), est ménagée une gorge en forme d'anneau circulaire (46), ayant un orifice d'admission (47) passant à travers le côté supérieur, et le côté supérieur de la moitié de plaque inférieure (42) est muni d'un collet en forme d'anneau de cercle pénétrant dans la gorge (46) et présentant, en un point de son pourtour, une entaille (45) s'étendant jusqu'à la surface de la moitié de plaque inférieure (42).

8. Support de moteur à deux chambres suivant la revendication 7, caractérisé en ce que la moitié de plaque inférieure (42) est montée en outre de manière à pouvoir coulisser axialement.

# FIG.1

# FIG. 2

FIG. 3

FIG. 4

FIG. 5

# FIG.6

# FIG.7

# FIG.8

# FIG.9